(19) Europäisches Patentamt
European Patent Office
Office européen des brevets

(11) **EP 2 386 594 A2**

(12) **EUROPÄISCHE PATENTANMELDUNG**

(43) Veröffentlichungstag:
**16.11.2011 Patentblatt 2011/46**

(51) Int Cl.:
*C08J 5/18* (2006.01)    *B32B 27/36* (2006.01)
*B32B 27/18* (2006.01)    *B32B 27/20* (2006.01)

(21) Anmeldenummer: **11003319.8**

(22) Anmeldetag: **20.04.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **03.05.2010 DE 102010019010**

(71) Anmelder: **Mitsubishi Polyester Film GmbH
65203 Wiesbaden (DE)**

(72) Erfinder:
• **Konrad, Matthias, Dr.
65830 Kriftel (DE)**
• **Witte, Ina, Dr.
55435 Gau-Algesheim (DE)**
• **Kuhmann, Bodo
65594 Runkel (DE)**

(74) Vertreter: **Schweitzer, Klaus et al
Plate Schweitzer Zounek
Patentanwälte
Rheingaustrasse 196
65203 Wiesbaden (DE)**

(54) **Biaxial orientierte Polyesterfolie mit sphärischen Partikeln und Titandioxid-Partikeln**

(57) Beschrieben ist eine ein- oder mehrschichtige, biaxial orientierte und thermofixierte Folie auf Basis von Polyester, bei der die Schicht bzw. mindestens eine Schicht auf Basis von Polyester 0,25 bis 1,5 Gew.-%, bezogen auf das Gesamtgewicht der Schicht, an sphärischen Partikeln aus organischem und/oder anorganisch/organischem Material, das in dem Polyester unlöslich ist, wobei die Partikel eine mittlere Partikelgröße ($d_{50}$) von 0,5 bis 3,0 $\mu$m aufweisen, und 0,25 bis 1,5 Gew.-% an Titandioxid-Partikeln mit einer mittleren Partikelgröße ($d_{50}$) von 0,02 bis 0,6 $\mu$m enthält. Der Polyester weist vorzugsweise einen Viskositätskoeffizienten von weniger als 1,3 auf. Die Folie ist geeignet als Transfer- oder Trennfolie, insbesondere bei der Herstellung von Flexodruckplatten.

EP 2 386 594 A2

**Beschreibung**

Die Erfindung betrifft eine ein- oder mehrschichtige, biaxial orientierte und thermofixierte Folie auf Basis von Polyester. Sie betrifft weiterhin ein Verfahren für die Herstellung der Folie und ihre Verwendung.

Die Industrie hat einen hohen Bedarf an Kunststoff-Folien, wie z.B. biaxial orientierte Polypropylen- oder biaxial orientierte Polyesterfolien, die definierte Oberflächen und optische Eigenschaften aufweisen. Folien mit gleichmäßiger, nicht zu hoher Oberflächenrauheit sind von Interesse in speziellen Anwendungen.

In der US-A 3,154,461 ist ein Verfahren zur Herstellung einer biaxial orientierten Folie aus thermoplastischem Kunststoff (z.B. Polyethylenterephthalat, Polypropylen) mit matter Oberfläche beansprucht, bei dem die Folie inkompressible Partikel (z.B. Calciumcarbonat, Siliciumdioxid) in einer Größe von 0,3 bis 20 $\mu$m und in einer Konzentration von 1 bis 25 Gew.-% enthält. Weiterhin ist in dieser Anmeldung die matte Folie, hergestellt nach dem erfindungsgemäßen Verfahren, beansprucht. Für viele Anwendungen ist die nach dem erfindungsgemäßen Verfahren hergestellte Folie zu rauh.

In der EP-A 1 197 326 ist eine matte, biaxial orientierte Polyesterfolie beschrieben, die 1 bis 10 Gew.-% Partikel mit einer mittleren Partikelgröße von 2 bis 5 $\mu$m enthält. Die mittlere Rauhigkeit $R_a$ dieser Folien liegt im Bereich von 150 bis 1000 nm. Über die Gleichmäßigkeit der Rauheit und die Höhe der höchsten Erhebungen werden keine Aussagen gemacht.

In der EP-B 152 265 ist eine Polyesterfolie offenbart, die 0,01-1,0 Gew.-% Siliziumdioxid und/oder Titandioxid mit einer mittleren Teilchengröße von 0,01-0,5 $\mu$m und 0,02-0,5 Gew.-% Calciumcarbonat mit einer mittleren Teilchengröße von 0,04-0,48 $\mu$m enthält. Diese Folie besitzt aufgrund der kleinen Partikel eine sehr niedrige Rauhigkeit, über die Transparenz werden keine Aussagen getroffen.

In der US-A 5,403,879 ist eine Polyesterfolie beschrieben, die 5 bis 25 Gew.-% Titandioxid, 0,1 bis 3 Gew.-% Silica mit einer mittleren Teilchengröße von 1 bis 5 $\mu$m und 0,02 bis 1,0 Gew.-% eines fluoreszierenden organischen Pigments enthält. Durch die hohe Konzentration an Titandioxid besitzt die Folie eine sehr niedrige Transparenz. In den Beispielen werden Folien mit einer Transparenz von kleiner 2% genannt bei einer Foliendicke von 188 $\mu$m.

Gegenstand der EP-A 188 198 ist eine Polyesterfolie, die 0,005 bis 5,0 Gew.-% organische Partikel einer Größe von 0,01 bis 5 $\mu$m mit enger Partikelgrößenverteilung enthält und zusätzlich ein Nukleierungsmittel (z.B. TiO$_2$). Das Beispiel enthält lediglich 1000 ppm organische Partikel. Die Oberflächentopographie wird als gleichmäßig beschrieben, eine genaue Definition hierzu gibt es nicht. Die Folien weisen eine hohe Transparenz auf.

In der EP-A 1674507 ist eine Polyesterfolie offenbart, die 0,25 bis weniger als 1,0 Gew.-% SiO$_2$ und 0,25 bis weniger als 1,0 Gew.-% TiO$_2$ enthält. Bei der Herstellung dieser Folie, die poröses Siliziumdioxid enthält, kommt es aufgrund der elastischen Eigenschaften des Polymers vermehrt zum Schwellen der Schmelze beim Austritt aus der Düse. Dies führt zu einem ungleichmäßigen Dickenprofil über die Breite der Folie und Problemen bei den weiteren Prozeßschritten.

Aufgabe der vorliegenden Erfindung war es, eine biaxial orientierte Polyesterfolie bereitzustellen, die eine gleichmäßig niedrige Rauhigkeit und definierte optische Eigenschaften aufweist. Insbesondere sollte die Transparenz der Folie im Bereich von 30 bis 90% liegen. Die Struktur der Oberfläche soll dazu führen, dass sich die Folie gut verarbeiten und beschichten lässt. Es dürfen keine hohen Spitzen ($R_p$ über 3,5 $\mu$m) vorhanden sein. Diese würden zu Defekten in der Beschichtung führen. Solche Folien werden z. B. benötigt in Anwendungen, bei denen die Oberflächentopographie der Folie auf ein Substrat übertragen wird und speziell dann, wenn die Folie mit einer Trennschicht, die auf dem Substrat haften bleibt, beschichtet wird.

Weiterhin soll das Polymer der Folie eine geringe Elastizität, d.h. eine niedrige Strukturviskosität, aufweisen, um Probleme bei der Extrusion zu vermeiden. Dies ist gegeben, wenn der Viskositätskoeffizient, der Quotient aus der Scherviskosität der Polymerschmelze, gemessen mit einem Hochdruck-Kapillar-Viskosimeter (Hochdruck-Kapillar-Rheometer mit einer Länge der Kapillare von 30 mm und einem Durchmesser der Kapillare von 1 mm; Typ: wie im Beispielsteil angegeben) bei einer Temperatur von 285 °C und einer Schergeschwindigkeit von 200 s$^{-1}$ bzw. 1200 s$^{-1}$, kleiner als 1,3 ist.

Elastische Eigenschaften der Schmelze spielen eine wichtige Rolle für den Maschinenlauf als auch die Folienqualität. Insbesondere beim Austritt der Schmelze aus der Breitschlitzdüse bewirken die elastischen Eigenschaften eine Strangaufweitung und damit Ungleichmäßigkeiten im Querprofil, die an der Düsenlippenkante entstehen.

Die Aufgabe wird erfindungsgemäß durch eine biaxial orientierte Polyesterfolie mit mindestens einer matten Basisschicht (B) gelöst, die sowohl sphärische Partikel zur Erzeugung der Oberflächenrauhigkeit als auch Titandioxid-Partikel zur Einstellung der Transparenz enthält.

Gegenstand der Erfindung ist demgemäß eine ein- oder mehrschichtige, biaxial orientierte und thermofixierte Folie auf Basis von Polyester, die dadurch gekennzeichnet ist, daß die Schicht bzw. mindestens eine Schicht 0,25 bis 1,5 Gew.-%, bezogen auf das Gesamtgewicht der Schicht, an sphärischen Partikeln aus organischem und/oder anorganisch/organischem Material, das in dem Polyester unlöslich ist, wobei die Partikel eine mittlere Partikelgröße ($d_{50}$) von 0,5 bis 3,0 $\mu$m aufweisen, und 0,25 bis 1,5 Gew.-% an Titandioxid-Partikeln mit einer mittleren Partikelgröße ($d_{50}$)

von 0,02 bis 0,6 µm enthält.

Die Konzentration der sphärischen Partikel liegt bei 0,25 bis 1,5 Gew.-%, bevorzugt 0,3 bis 1,4 Gew.-%, besonders bevorzugt bei 0,35 bis 1,3 Gew.-%, jeweils bezogen auf das Gesamtgewicht der einschichtigen Folie bzw. der betreffenden Schicht der mehrschichtigen Folie. Die Konzentration des Titandioxids liegt bei 0,25 bis 1,5 Gew.-%, bevorzugt 0,3 bis 1,25 Gew.-%, besonders bevorzugt bei 0,35 bis 1,0 Gew.-%, jeweils bezogen auf das Gesamtgewicht der Folie bzw. der betreffenden Schicht der Folie. Durch entsprechende Variation der Konzentration der beiden Füllstoffe erreicht man für unterschiedlich dicke Folien Rauh- und Transparenzwerte, die im gewünschten Bereich liegen.

Bevorzugt weist die erfindungsgemäße Folie folgende Eigenschaften auf:

Die höchste Erhebung auf der Folie (Rp) ist kleiner 3,5 µm, bevorzugt kleiner 3,2 µm und besonders bevorzugt kleiner 2,9 µm.

Die Größe der sphärischen Partikel liegt zwischen 0,5 µm und 3,0 µm, bevorzugt zwischen 1,0 µm und 2,8 µm und besonders bevorzugt zwischen 1,5 µm und 2,5 µm ($d_{50}$). Die sphärischen Partikel sind bevorzugt organisch und besonders bevorzugt auf Acrylat-Basis. Die Ausdehnung der sphärischen organischen Partikel sollte in alle Raumrichtungen ungefähr gleich groß sein, d.h. das Verhältnis von Länge zu Breite zu Höhe sollte nahe bei 1:1:1 liegen, bevorzugt bei (0,9 bis 1,1) : (0,9 bis 1,1) : 1.

Die Transparenz der Folie liegt im Bereich zwischen 30 und 90%, bevorzugt zwischen 40 und 80% und besonders bevorzugt zwischen 50 und 70%.

Das Titandioxid kann sowohl vom Rutil-Typ als auch vom Anatas-Typ sein. Die Korngröße des Titandioxids liegt bevorzugt zwischen 0,02 und 0,6 µm, bevorzugt zwischen 0,05 und 0,5 µm und besonders bevorzugt zwischen 0,1 und 0,4 µm.

Die Zahl der Erhebungen auf der Oberfläche der Folie, die höher als 0,5 µm sind, liegt zwischen 500 und 1200 pro mm$^2$, bevorzugt zwischen 550 und 1100 pro mm$^2$ und besonders bevorzugt zwischen 600 und 1000 pro mm$^2$.

Der Glanz der Folie, gemessen bei 60°, liegt zwischen 25 und 110, bevorzugt zwischen 35 und 100, besonders bevorzugt zwischen 45 und 90.

Die Scherviskosität des Materials, aus dem die Folie besteht, d.h. die Mischung aus Polymer und Partikeln, ist bei verschiedenen Schergeschwindigkeiten möglichst konstant. Dies wird durch den Viskositätskoeffizienten, d.h. den folgenden Quotienten ausgedrückt:

$$Q = \frac{\eta_{200}}{\eta_{1200}} < 1{,}3$$

$\eta_{200}$ und $\eta_{1200}$ sind die Viskositäten des Materials, gemessen bei 200 s$^{-1}$ bzw. 1200 s$^{-1}$.

Erfindungsgemäß ist die Folie vorzugsweise einschichtig und umfaßt in diesem Fall nur die Basisschicht (B).

Die Basisschicht (B) der Folie enthält bevorzugt mindestens 70 Gew.-% an thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexan-dimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterephthalat-Homopolymer.

Geeignete andere aliphatische Diole sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für -CH$_2$-, -C(CH$_3$)$_2$-, -C(CF$_3$)$_2$-, -O-, -S- oder -SO$_2$- und C$_6$H$_4$ für Phenylen, insbesondere für para-Phenylen, steht. Daneben sind auch Bisphenole der Formel HO-C$_6$H$_4$-C$_6$H$_4$-OH gut geeignet.

Andere aromatische Dicarbonsäuren sind bevorzugt Benzoldicarbonsäuren, Naphthalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen (wobei x und x' unabhängig voneinander für 2, 3 oder 4 stehen). Von den aliphatischen Dicarbonsäuren sind die ($C_3$ - $C_{19}$)Alkandisäuren besonders geeignet, wobei der Alkanteil geradkettig oder verzweigt sein kann.

Die gegebenenfalls vorhandene(n) zusätzlichen Schichten (Zwischen- oder Deckschichten) der Folie bestehen bevorzugt ebenfalls aus einem Polyester, wie er oben für die Basisschicht beschrieben wurde, wobei die Zusammensetzung des Polyesters gleich oder verschieden ist von der der Basisschicht.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung enthält sowohl sphärische Partikel als auch $TiO_2$-Partikel zur Erzeugung der gewünschten Oberflächeneigenschaften und Optik.

Die sphärischen Partikel sind in der Folie in einer Menge von 0,25 bis 1,5 Gew.-%, bevorzugt 0,3 bis 1,4 Gew.-%, besonders bevorzugt 0,4 bis 1,3 Gew.-%, jeweils bezogen auf das Gesamtgewicht der einschichtigen Folie bzw. der damit ausgerüsteten Schicht der mehrschichtigen Folie, enthalten. Wenn die Folie mehrschichtig ist, dann ist die angegebene Menge an sphärischen Partikeln zumindest in einer äußeren Schicht enthalten. Sind weniger als 0,25 Gew.-% vorhanden, bezogen auf das Gewicht der einschichtigen Folie bzw. der betreffenden Schicht der mehrschichtigen Folie, so sind zu wenig Erhebungen an der Oberfläche der Folie vorhanden. Bei mehr als 1,5 Gew.-% wird die Oberfläche inhomogen, da Partikel an der Oberfläche durch darunter liegende Partikel nach oben gedrückt werden. Bevorzugt weisen die sphärischen Partikel eine mittlere Teilchengröße von 0,5 bis 3,0 $\mu$m, bevorzugt von 1 bis 2,8 $\mu$m und besonders bevorzugt von 1,5 bis 2,5 $\mu$m ($d_{50}$) auf. Sind die Partikel größer als 3,0 $\mu$m, so sind die Erhebungen zu hoch und führen zu Beschichtungsfehlern. Die Ausdehnung der sphärischen Partikel sollte in alle Raumrichtung ungefähr gleich groß sein, d.h. das Verhältnis von Länge zu Breite zu Höhe sollte nahe bei 1:1:1 liegen, bevorzugt bei (0,9-1,1):(0,9-1,1):1. Sie sind damit mehr oder weniger kugelförmig.

Die sphärischen Partikel können aus organischem und/oder anorganisch/organischem Material bestehen. In einer bevorzugten Ausführungsform bestehen sie aus organischen Polymeren, beispielsweise aus Melamin-Formaldehyd-Harz, Benzoguanamin-Formaldehyd-Harz oder einem Epoxyharz.

Die organischen Partikel können aus ungesättigten Monomeren wie Ester der Acryl-und Methacrylsäure wie Methylmethacrylat, Ester ungesättigter Dicarbonsäuren wie Maleinsäuredialkylester, ungesättigten Vinylverbindungen wie Styrol, ungesättigten Nitrilen wie Acrylnitril, funktionellen Monomeren wie ungesättigte Carbonsäuren, hydroxylhaltigen Monomeren wie Hydroxyethylmethacrylat, epoxidgruppenhaltigen Monomeren wie Glycidylmethacrylat, ungesättigten Sulfonsäuren u.a. aufgebaut sein. Bevorzugt sind die organischen Partikel vernetzt. Beispiele für vernetzende ungesättigte Monomere sind Diallylphthalat und Divinylbenzol.

Die sphärischen Partikel können auch aus anorganisch/organischem Material, wie Siloxanen, beispielsweise Polymethylsilsesquioxanen, bestehen.

Der Vernetzungsgrad der Partikel kann durch die Zusammensetzung der entsprechenden Komponenten in weiten Grenzen variiert werden.

Wesentlich ist, dass die Partikel während der Folienherstellung nicht schmelzbar und nicht im Polymer löslich sind und die Form und Größe erhalten bleibt.

Die $TiO_2$-Partikel sind in der Folie ebenfalls in einer Menge von 0,25 bis 1,5 Gew.-%, bevorzugt 0,3 bis 1,25 Gew.-%, besonders bevorzugt 0,35 bis 1,0 Gew.-%, jeweils bezogen auf das Gesamtgewicht der Folie bzw. der betreffenden Schicht der mehrschichtigen Folie, enthalten. Sind weniger als 0,25 Gew.-% vorhanden, so ist die Transparenz zu hoch. Sind mehr als 1,5 Gew.-% vorhanden, ist die Transparenz zu niedrig. Bevorzugt weisen die $TiO_2$-Partikel eine mittlere Teilchengröße ($d_{50}$) von 0,02 bis 0,6 $\mu$m, bevorzugt von 0,05 bis 0,5 $\mu$m und besonders bevorzugt von 0,1 bis 0,4 $\mu$m auf. Sind die Partikel kleiner als 0,02 $\mu$m, so bilden sich leicht Agglomerate. Sind die Partikel größer als 0,6 $\mu$m, so beeinflussen sie die Rauhigkeit. Die Titandioxidpartikel können sowohl vom Rutil-Typ als auch vom Anatas-Typ sein.

Die Kombination der sphärischen Partikel und $TiO_2$-Partikel bewirkt, dass die höchste Erhebung auf der Folie (Rp) kleiner gleich 3,5 $\mu$m ist, bevorzugt kleiner gleich 3,2 $\mu$m und besonders bevorzugt kleiner gleich 2,9 $\mu$m. Ist sie größer als 3,5 $\mu$m, so durchstoßen diese Spitzen eine in einem weiteren Verarbeitungsschritt aufgebrachte Beschichtung. Die Gesamtzahl der Erhebungen auf der Oberfläche der Folie, die höher als 0,5 $\mu$m sind, liegt zwischen 500 und 1200 pro mm$^2$, bevorzugt zwischen 550 und 1100 pro mm$^2$ und besonders bevorzugt zwischen 600 pro mm$^2$ und 1000 pro mm$^2$. Ist sie kleiner als 500 pro mm$^2$, so führt dies zu Problemen bei der Verarbeitung.

Die Kombination der sphärischen Partikel und $TiO_2$-Partikel bewirkt außerdem, dass die Transparenz der Folie zwischen 30 und 90%, bevorzugt zwischen 40 und 80%, besonders bevorzugt zwischen 50 und 70%, liegt.

Die Basisschicht (B) kann neben den sphärischen und $TiO_2$-Partikeln noch zusätzlich übliche Additive, wie beispielsweise Stabilisatoren enthalten. Als Stabilisatoren geeignet sind beispielsweise Phosphorverbindungen, wie Phosphorsäure oder Phosphorsäureester. Weitere Partikel, die die Oberflächeneigenschaften und/oder Optik der Folie beeinflussen, wie $CaCO_3$-Partikel, sind in der erfindungsgemäßen Folie bevorzugt nicht vorhanden.

Die Dicke der erfindungsgemäßen Polyesterfolie kann in weiten Grenzen variieren. Sie liegt allgemein im Bereich von 20 bis 500 $\mu$m, bevorzugt von 30 bis 350 $\mu$m, besonders bevorzugt von 40 bis 250 $\mu$m.

Ist die Folie mehrschichtig aufgebaut, sind die sphärischen Partikel bevorzugt in den Deckschichten enthalten.

Die Erfindung betrifft auch ein Verfahren zur Herstellung der erfindungsgemäßen Polyesterfolie nach dem an sich aus der Literatur bekannten Extrusionsverfahren (s. z.B.: S. Fakirov, Handbook of Thermoplastic Polyesters, Verlag Wiley-VCH [2002] oder im Kapitel "Polyesters, Films" in der Encyclopedia of Polymer Science and Engineering, Vol. 12, Verlag John Wiley & Sons [1988]).

Im Rahmen dieses Verfahrens wird so vorgegangen, dass die der Folie entsprechende Schmelze durch eine Flachdüse extrudiert, die so erhaltene Folie zur Verfestigung auf einer oder mehreren Walze/n abgezogen, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im allgemeinen aufeinander folgend durchgeführt, wobei die Vorfolie bevorzugt erst in Längsrichtung (d.h. in Maschinenrichtung) und dann in Querrichtung (d.h. senkrecht zur Maschinenrichtung) gestreckt wird.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann gleichzeitig durch eine Flachdüse (Breitschlitzdüse) gepresst, und die ausgepresste Schmelze auf einer oder mehreren gekühlten Abzugswalzen abgezogen, wobei die Schmelze abkühlt und sich zu einer Vorfolie verfestigt.

Die biaxiale Streckung führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150°C durchgeführt. Das Längsstreckverhältnis liegt allgemein im Bereich von 2,5:1 bis 4,5:1, bevorzugt von 3:1 bis 4:1. Das Querstreckverhältnis liegt allgemein im Bereich von 2,5:1 bis 4,5:1, bevorzugt von 3:1 bis 4:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung können eine oder beide Oberfläche/n der Folie nach einer der bekannten Methoden corona- oder flammbehandelt werden. Die Behandlungsintensität wird so eingestellt, dass sich eine Oberflächenspannung von mehr als 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Bei der Herstellung der erfindungsgemäßen Folie ist gewährleistet, dass das Verschnittmaterial (Regenerat) in einer Menge im Bereich von bis zu 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild und die Rauhigkeit.

Die erfindungsgemäße Folie zeichnet sich durch eine besondere Oberflächenstruktur, insbesondere eine gleichmäßige Rauhigkeit, und definierte optische Eigenschaften aus und ist für die Verwendung im industriellen Sektor gut geeignet. Die folgende Tabelle 1 gibt die Eigenschaften der erfindungsgemäßen Folien wider.

**Tabelle 1**

| Folieneigenschaften | erfindungsgem. Bereich | bevorzugt | besonders bevorzugt | Einheit | Messmethode |
|---|---|---|---|---|---|
| Gehalt an sphärischen Partikeln | 0,25-1,5 | 0,3-1,4 | 0,35-1,3 | Gew.-% | |

(fortgesetzt)

| Folieneigenschaften | erfindungsgem. Bereich | bevorzugt | besonders bevorzugt | Einheit | Messmethode |
|---|---|---|---|---|---|
| Größe sphärische Partikel ($d_{50}$) | 0,5-3,0 | 1,0-2,8 | 1,5-2,5 | $\mu$m | |
| Gehalt an $TiO_2$ | 0,25-1,5 | 0,3-1,25 | 0,35-1,0 | Gew.-% | |
| Partikelgröße $TiO_2$ ($d_{50}$) | 0,02-0,6 | 0,05-0,5 | 0,1-0,4 | $\mu$m | |
| Höchste Erhebung (Rp) | < 3,5 | < 3,2 | < 2,9 | $\mu$m | |
| Anzahl der Erhebungen >0,5 $\mu$m | 500-1200 | 550-1100 | 600-1000 | 1/mm$^2$ | |
| Viskositätskoeffizient | < 1,3 | < 1,25 | < 1,2 | | |
| Transparenz | 30-90 | 40-80 | 50-70 | % | ASTM-D 1003-00 |
| Glanz (60°) | 25-110 | 35-100 | 45-90 | | DIN 67 530 |

Aufgrund ihrer Eigenschaften eignen sich die erfindungsgemäßen Folien zur Erzeugung von wenig glänzenden, rauhen Oberflächen auf verschiedenen Substraten, besonders wenn zunächst dünne Schichten auf die Folie aufgebracht werden. In diesem Falle kommt es durch die niedrige, gleichmäßige Rauhigkeit zur homogenen Beschichtung der Oberfläche. Eine Bildung von Löchern oder Dünnstellen in der Beschichtung wird verhindert Besonders bevorzugt ist die Anwendung als Transfer- und Trennfolie, speziell bei der Herstellung von Flexodruckplatten.

Dabei wird durch Lösungsmittelbeschichtung eine dünne (etwa 2 bis 3 $\mu$m starke) Polyamidschicht auf die erfindungsgemäße Polyesterfolie aufgebracht. In der Polyamidschicht sind Rußpartikel verteilt, so daß sie tiefschwarz erscheint. Anstelle oder zusätzlich zu den Rußpartikeln können auch andere Licht-absorbierende Materialien eingesetzt werden.

Eine Schicht aus photopolymerisierbarem Material wird dann zwischen eine dimensionsstabile Trägerfolie und die beschriebene PET/PA-Folie extrudiert und direkt anschließend mit Hilfe von Walzenpaaren kalandriert. Erhalten wird auf diese Weise ein Flexodruck-Element mit einem Aufbau

# PET/(PA + Ruß)/photopolymerisierbares Gemisch/Trägerfolie

Durch die Oberflächenstruktur der erfindungsgemäßen PET-Folie wird erreicht, daß die Polyamidschicht gut haftet, zugleich wird ein Blocken der PET-Folie verhindert.

Vor der Bebilderung des Aufzeichnungsmaterials wird die PET-Folie von der Polyamidschicht abgezogen. Die Bebilderung selbst erfolgt allgemein mit Hilfe von Infrarot-Laserstrahlen. Die Laserstrahlen werden von der Polyamid/Ruß-Schicht absorbiert. In den von der Strahlung getroffenen Bereichen wird die Polyamid/Ruß-Schicht abgetragen und die darunter liegende photopolymerisierbare Schicht freigelegt. Die Polyamidschicht wirkt damit als IR-ablative Maske. Die freigelegten Bereiche werden dann in üblicher Weise durch vollflächiges Bestrahlen mit UV-Strahlung gehärtet. Die nicht gehärteten Bereiche werden anschließend ausgewaschen, zusammen mit den noch vorhandenen Bereichen der PA-Schicht.

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN EN ISO 1628-2, Ausgabe November 1999 (ersetzt DIN 53 726), an einer 1,0 gew.-%igen Lösung des Polymers in Dichloressigsäure (DCE) bei einer Temperatur von 25 $\pm$ 0,05 °C gemessen.

Die intrinsische Viskosität (IV) berechnet sich wie folgt aus der Standardviskosität

$$IV (DCE) = 6{,}907 \cdot 10^{-4} \, SV (DCE) + 0{,}063096 \quad [dl/g]$$

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Messung des mittleren Durchmessers $d_{50}$**

Die Bestimmung des mittleren Durchmessers $d_{50}$ wurde mittels Laser auf einem Malvern Master Sizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert.

**Topographie**

Die Topographie der Oberfläche wurde mit einem Weißlicht-Interferometrie-Mikroskop der Firma Veeco, Typ Wyko NT3300, bestimmt. Gemessen wurde eine Fläche von 0.92 mm x 1.21 mm (480 x 736 Pixel) bei 5.1-facher Vergrößerung. Zur Messung wurde ein Folienstück von 10 x 10 cm Größe auf den Tisch des Mikroskops gelegt und zur Fixierung mit einem Metallring mit einem Durchmesser von 5 cm beschwert. Die Messung erfolgte im VSI-Modus (vertical scanning interferometry). Die Messlänge in z-Richtung wurde auf 15 $\mu$m festgelegt. Eine eventuelle Welligkeit des Musters wurde herausgefiltert. Fehlende Messwerte an den Flanken der Erhebungen wurden rechnerisch ergänzt (data restore). Die maximale Erhebung $R_p$ ist der Abstand von der berechneten Mittelebene (Mittelwert aller Messpunkte) zum höchsten Punkt analog DIN EN ISO 4287.

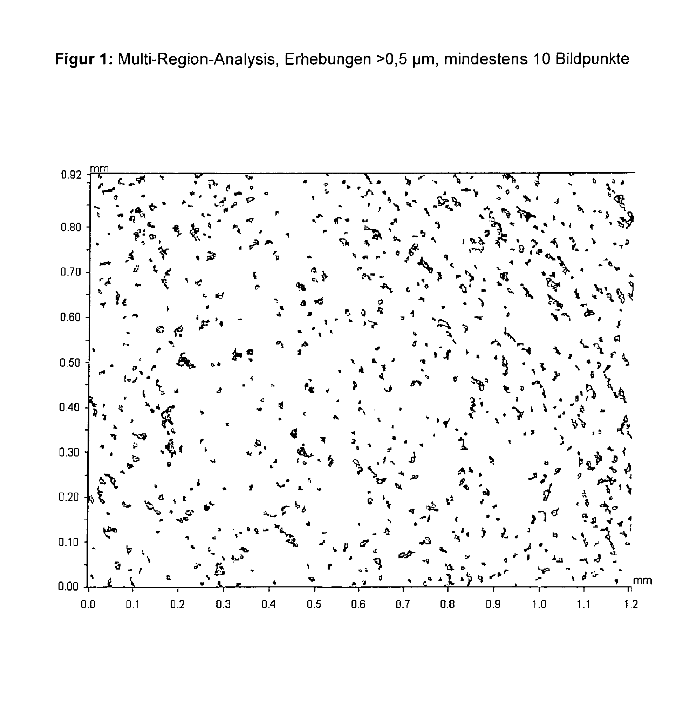

Zur Analyse der Erhebungen wurde die so genannte Multi-Region-Analysis verwendet. Hierbei wurde die Messfläche nach zusammenhängenden Regionen untersucht, die höher als 0,5 $\mu$m sind. Allerdings wurden nur Regionen berücksichtigt, die eine Größe von mindestens 10 Bildpunkten haben. Ein Beispiel ist in **Figur 1** gezeigt.

**Viskosität**

Die Viskosität kann mit einem Kapillarviskosimeter oder auch einem Kegel-Platte Rheometer ermittelt werden. Die in dieser Schrift genannten Werte wurden mit einem HochdruckKapillarRheometer Rheo-Tester 1000 der Firma Göttfert (Buchen, Deutschland) bestimmt. Die Proben wurden zunächst sorgfältig unter Vakuum getrocknet. Die Messtemperatur betrug 285°C, die Aufschmelzdauer 300 s. Die Kapillare hatte eine Länge von 30 mm und einen Durchmesser von 1 mm. Gemessen wurde bei Schergeschwindigkeiten von 200 und 1200 s$^{-1}$.

**Transparenz**

Die Messung an den Polyesterfolien erfolgt am Hazegard Hazemeter XL-211 der Fa. BYK Gardner nach ASTM-D 1003-00.

Im Folgenden wird die Erfindung anhand von Beispielen näher erläutert.

**Beispiel 1**

Chips aus Polyethylenterephthalat wurden getrocknet und dem Extruder für die Basisschicht (B) zugeführt. Dann wurde durch Extrusion und anschließende stufenweise Orientierung in Längs- und Querrichtung eine einschichtige Folie mit einer Gesamtdicke von 100 $\mu$m hergestellt.

Hergestellt wurde die Folie aus einer Mischung aus

70 Gew.-%    Polyethylenterephthalat mit einem SV-Wert von 800

20 Gew.-%    Masterbatch aus 95 Gew.-% Polyethylenterephthalat und 5,0 Gew.-%

organischen Partikeln aus vernetztem Polymethylmethacrylat (PMMA

(fortgesetzt)

|  | Epostar MA1002 der Nippon Shokubai, Japan) mit einem $d_{50}$-Wert von 2,46 $\mu$m. |
|---|---|
| 10 Gew.-% | Masterbatch aus 95 Gew.-% Polyethylenterephthalat und 5,0 Gew.-% Titandioxid mit einem $d_{50}$-Wert von 0,2 $\mu$m. |

Die Herstellungsbedingungen in den einzelnen Verfahrensschritten waren:

| Extrusion: | Temperaturen | 290°C | |
|---|---|---|---|
| | Temperatur der Abzugswalze | 30 | °C |
| Längsstreckung: | Temperatur: | 80-126 | °C |
| | Längsstreckverhältnis: | 3,5 | |
| Querstreckung: | Temperatur: | 80-135 | °C |
| | Querstreckverhältnis | 3,8 | |
| Fixierung: | Temperatur | 230 | °C |
| | Dauer: | 3 | s |

Die Folie hatte die geforderte gleichmäßige niedrige Rauhigkeit und die geforderte Transparenz. Die erzielten Eigenschaften der Folie sind in der Tabelle 2 widergegeben.

**Beispiel 2**

Im Vergleich zu Beispiel 1 wurde die Zusammensetzung der Folie wie folgt geändert: Sie bestand aus einer Mischung aus

| 74 Gew.-% | Polyethylenterephthalat mit einem SV-Wert von 800 |
|---|---|
| 16 Gew.-% | Masterbatch aus 95 Gew.-% Polyethylenterephthalat und 5,0 Gew.-% organischen Partikeln aus vernetztem PMMA (Ganz Pearl GM0105, Ganz Chemical Co., Japan) mit einem $d_{50}$-Wert von 2,27 $\mu$m und |
| 10 Gew.-% | Masterbatch aus 95 Gew.-% Polyethylenterephthalat und 5,0 Gew.-% Titandioxid mit einem $d_{50}$-Wert von 0,2 $\mu$m. |

Die Rauhigkeit der Folie hat sich gegenüber Beispiel 1 erhöht, die Transparenz ist etwas höher.

**Beispiel 3**

Im Vergleich zu Beispiel 1 wurde die Zusammensetzung der Folie wie folgt geändert: Sie bestand aus einer Mischung aus

| 70 Gew.-% | Polyethylenterephthalat mit einem SV-Wert von 800 |
|---|---|
| 20 Gew.-% | Masterbatch aus 95 Gew.-% Polyethylenterephthalat und 5,0 Gew.-% organischen Partikeln aus Polymethylsilsesquioxan (E+ 520 der ABC Nanotech Co. Ltd., Korea) mit einem $d_{50}$-Wert von 2,11 $\mu$m |
| 10 Gew.-% | Masterbatch aus 95 Gew.-% Polyethylenterephthalat und 5,0 Gew.-% Titandioxid mit einem $d_{50}$-Wert von 0,2 $\mu$m. |

Die Rauhigkeit der Folie hatte sich gegenüber Beispiel 1 erhöht.

**Vergleichsbeispiel 1**

Im Vergleich zu Beispiel 1 wurde die Folie mit einem Partikelsystem entsprechend der EP-A 1 197 326 hergestellt. Die Beispiele der EP-A 1 197 326 weisen $SiO_2$-Gehalte auf, die bei 2 bis 3 Gew.-% liegen. Es wurde ein Vergleich mit einer Partikelkonzentration gewählt, die näher am Gegenstand der vorliegenden Erfindung liegt (1,0 Gew.-%). Die Rauhigkeit der Folie war zu hoch.

Hergestellt wurde die Folie aus einer Mischung von

80 Gew.-%    Polyethylenterephthalat mit einem SV-Wert von 800 und

20 Gew.-%    Masterbatch aus 95 Gew.-% Polyethylenterephthalat und 5,0 Gew.-% Kieselsäurepartikel mit einem $d_{50}$-Wert von 3,4 $\mu$m.

**Vergleichsbeispiel 2**

Im Vergleich zu Beispiel 1 wurde jetzt die Folie entsprechend der EP-A 1674507 Beispiel 3 hergestellt.

**Tabelle 2**

| Beispiel | $d_{50}$-Wert sphärische Partikel in Folie [$\mu$m] | $d_{90}$-Wert sphärische Partikel in Folie [$\mu$m] | Konzentration an sphärischen Partikeln [Gew.-%] | Durchmesser $TiO_2$ [$\mu$m] | Konzentration $TiO_2$ [Gew.-%] | Anzahl der Peaks >0,5 $\mu$m | Höchste Erhebung Rp [$\mu$m] | Viskositäts-koeffizient | Transparenz [%] | Glanz bei 60° |
|---|---|---|---|---|---|---|---|---|---|---|
| B1 | 2,46 | 3,47 | 1,0 | 0,2 | 0,5 | 748 | 2,83 | 1,21 | 63 | 72 |
| B2 | 2,27 | 3,38 | 0,8 | 0,2 | 0,5 | 729 | 2,67 | 1,12 | 64 | 67 |
| B3 | 2,11 | 3,03 | 1,0 | 0,2 | 0,5 | 771 | 2,28 | 1,18 | 61 | 78 |
| VB 1 | 3,4 | 4,91 | 1,0 | - | - | 1268 | 4,45 | 1,45 | 65 | 38 |
| VB 2 | 2,5 | 4,09 | 0,5 | 0,2 | 0,5 | 805 | 3,23 | 1,36 | 63 | 50 |

Die Foliendicke betrug in allen in der Tabelle genannten Beispielen und Vergleichsbeispielen 100 $\mu$m.

**Patentansprüche**

1. Ein- oder mehrschichtige, biaxial orientierte und thermofixierte Folie auf Basis von Polyester, **dadurch gekennzeichnet, dass** die Schicht bzw. mindestens eine Schicht auf Basis von Polyester 0,25 bis 1,5 Gew.-%, bezogen auf das Gesamtgewicht der Schicht, an sphärischen Partikeln aus organischem und/oder anorganisch/organischem Material, das in dem Polyester unlöslich ist, wobei die Partikel eine mittlere Partikelgröße ($d_{50}$) von 0,5 bis 3,0 $\mu$m aufweisen, und 0,25 bis 1,5 Gew.-% an Titandioxid-Partikeln mit einer mittleren Partikelgröße ($d_{50}$) von 0,02 bis 0,6 $\mu$m enthält.

2. Folie gemäß Anspruch 1, **dadurch gekennzeichnet, dass** die sphärischen Partikel ein Verhältnis von Länge : Breite : Höhe im Bereich von (0,9 - 1,1) : (0,9- 1,1) : (0,9 : 1,1) aufweisen.

3. Folie gemäß Anspruch 1 oder 2, **dadurch gekennzeichnet, dass** die sphärischen Partikel aus organischen oder anorganisch/organischen Polymeren bestehen, bevorzugt aus Melamin/Formaldehyd-Harzen, Benzoguanamin/ Formaldehyd-Harzen, Epoxyharzen oder Polymethylsilsequioxanen.

4. Folie gemäß einem oder mehreren der Ansprüche 1 bis 3, **dadurch gekennzeichnet, dass** der Anteil der sphärischen Partikel 0,4 bis 1,3 Gew.-% beträgt, bezogen auf das Gewicht der einschichtigen Folie bzw. der betreffenden Schicht der mehrschichtigen Folie.

5. Folie gemäß einem oder mehreren der Ansprüche 1 bis 4, **dadurch gekennzeichnet, dass** der Anteil der Titandioxid-Partikel 0,3 bis 1,25 Gew.-%, bevorzugt 0,35 bis 1,0 Gew.-% beträgt, jeweils bezogen auf das Gewicht der einschichtigen Folie bzw. der betreffenden Schicht der mehrschichtigen Folie.

6. Folie gemäß einem oder mehreren der Ansprüche 1 bis 5, **dadurch gekennzeichnet, dass** der Polyester einen Viskositätskoeffizienten von weniger als 1,3 aufweist.

7. Folie gemäß einem oder mehreren der Ansprüche 1 bis 6, **dadurch gekennzeichnet, dass** sie eine Transparenz von 30 und 90 %, bevorzugt von 40 bis 80 %, besonders bevorzugt von 50 und 70 %, und/oder einen Oberflächenglanz, bestimmt gemäß DIN 67530 bei einem Einstrahlwinkel von 60°, von 25 bis 110, bevorzugt von 35 bis 100, besonders bevorzugt von 45 bis 90, aufweist.

8. Folie gemäß einem oder mehreren der Ansprüche 1 bis 7, **dadurch gekennzeichnet, dass** sie eine Dicke von 20 bis 500 $\mu$m, bevorzugt 30 bis 350 $\mu$m, besonders bevorzugt 40 bis 250 $\mu$m, aufweist.

9. Folie gemäß einem oder mehreren der Ansprüche 1 bis 8, **dadurch gekennzeichnet, dass** sie mehrschichtig ist und die Deckschicht die sphärischen Partikel und die Titandioxid-Partikel enthält.

10. Folie gemäß einem oder mehreren der Ansprüche 1 bis 9, **dadurch gekennzeichnet, dass** die höchsten Erhebungen auf ihrer Oberfläche (Rp) nicht höher als 3,5 $\mu$m, bevorzugt nicht höher als 3,2 $\mu$m, besonders bevorzugt nicht höher als 2,9 $\mu$m, sind.

11. Folie gemäß einem oder mehreren der Ansprüche 1 bis 10, **dadurch gekennzeichnet, dass** die Gesamtzahl der Erhebungen auf ihrer Oberfläche, die höher als 0,5 $\mu$m sind, zwischen 500 und 1200 pro mm$^2$, bevorzugt zwischen 550 und 1100 pro mm$^2$, besonders bevorzugt zwischen 600 und 1000 pro mm$^2$, beträgt.

12. Folie gemäß einem oder mehreren der Ansprüche 1 bis 11, **dadurch gekennzeichnet, dass** der Polyester zu mindestens 90 mol-%, bevorzugt zu mindestens 95 mol-%, aus Ethylenglykol- und Terephthalsäure-Einheiten oder aus Ethylenglykol- und Naphthalin-2,6-dicarbonsäure-Einheiten besteht.

13. Folie gemäß einem oder mehreren der Ansprüche 1 bis 12, **dadurch gekennzeichnet, dass** sie mehrschichtig ist und die weitere(n) Schicht(en) ebenfalls auf Basis von Polyestern aufgebaut sind.

14. Verfahren zur Herstellung einer Folie gemäß einem oder mehreren der Ansprüche 1 bis 13, **dadurch gekennzeichnet, dass** es die folgenden Schritte in der angegebenen Reihenfolge umfasst:

a) Extrudieren einer Polyester-Schmelze, die sphärische Partikel und Titandioxid-Partikel enthält, durch eine Breitschlitzdüse,
b) Abziehen und Verfestigen der so erhaltenen Vorfolie auf mindestens einer vorzugsweise gekühlten Walze,
c) biaxiales Orientieren der verfestigten Vorfolie, bevorzugt zuerst in Längsrichtung bei einer Temperatur von 80 bis 130 °C, danach in Querrichtung bei einer Temperatur von 80 bis 150 °C,
d) Thermofixieren der orientierten Folie in einer Zeitspanne von 0,1 bis 10 Sekunden bei einer Temperatur von 150 bis 250 °C,
e) gegebenenfalls Beschichten der thermofixierten Folie, wobei die Beschichtung bevorzugt haftvermittelnde, antistatische, schlupfverbessernde, hydrophile und/oder dehäsive Eigenschaften aufweist.

15. Verwendung der Folie gemäß einem oder mehreren der Ansprüche 1 bis 13 als Transfer- oder Trennfolie.

**Figur 1:** Multi-Region-Analysis, Erhebungen >0,5 µm, mindestens 10 Bildpunkte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3154461 A
- EP 1197326 A
- EP 152265 B
- US 5403879 A
- EP 188198 A
- EP 1674507 A

**In der Beschreibung aufgeführte Nicht-Patentliteratur**

- **S. FAKIROV.** Handbook of Thermoplastic Polyesters. Verlag Wiley-VCH, 2002
- Polyesters, Films. Encyclopedia of Polymer Science and Engineering. Verlag John Wiley & Sons, 1988, vol. 12